# EUROPÄISCHE PATENTSCHRIFT

(11) **EP 2 881 552 B1**
(45) Veröffentlichungstag und Bekanntmachung des Hinweises auf die Patenterteilung: **03.05.2017**
(21) Anmeldenummer: 14194722.6
(22) Anmeldetag: 25.11.2014
(51) Int. Cl.: F01D 25/14, F01D 25/24, F02C 3/13

(54) **Fluggasturbine mit einem Kerntriebwerksgehäuse mit Kühlluftröhren**
Aircraft gas turbine having a core engine housing with cooling air tubes
Turbine à gaz d'avion équipée d'un boîtier de turbine à noyau avec des conduits d'air froid

(30) Priorität: 05.12.2013 DE 102013224982
(43) Veröffentlichungstag der Anmeldung: 10.06.2015
(73) Patentinhaber: Rolls-Royce Deutschland Ltd & Co KG, 15827 Blankenfelde-Mahlow (DE)
(72) Erfinder: Todorovic, Predrag, 10437 Berlin (DE)
(74) Vertreter: Hoefer & Partner Patentanwälte mbB

(56) Entgegenhaltungen:
- FR-A1- 2 961 857
- GB-A- 2 057 574
- US-A1- 2009 180 872
- US-B2- 7 687 021

## Beschreibung

Die Erfindung bezieht sich auf eine Fluggasturbine mit einem Kern-Triebwerksgehäuse mit Kühlluftröhren gemäß dem Oberbegriff des Anspruches 1.

Im Einzelnen bezieht sich die Erfindung auf eine Fluggasturbine, welche ein Kern-Triebwerksgehäuse eines Kerntriebwerks aufweist, wobei das Kern-Triebwerksgehäuse an seiner Außenseite mit Kühlluftröhren versehen ist, um Kühlluft aus dem Kompressor einem Brennkammerbereich und/oder einem Turbinenbereich zuzuführen.

Moderne Turbo-Fan-Gasturbinen verwenden zunehmend kleinere Kerntriebwerke, welche bei hohen oder höheren Temperaturen betrieben werden. Hierdurch ergibt sich ein geringerer Bauraum radial außerhalb des Kern-Triebwerksgehäuses, um Bauteile und Komponenten einzubauen. Dies betrifft auch die Zuführung von Kühlluft vom Kompressorbereich zu dem Brennkammerbereich bzw. dem Turbinenbereich, da der zur Verfügung stehende Zwischenraum zwischen dem Kern-Triebwerksgehäuse und einer inneren Wandung eines Nebenstromkanals sehr eng ist.

Die aus dem Stand der Technik bekannten Maßnahmen, separate Rohre in klassischer Anordnung einzubauen, scheiden somit aus. Beispiele für derartige separate Rohrverbindungen zeigen die US 2005/0252194 A1, die US 3,641,766 oder die GB 2 377 973 A. Bedingt durch den geringen Bauraum ist es auch nicht möglich, Ringkanäle für die Kühlluft vorzusehen, so wie dies aus der US 2011/0247344 A1 oder der US 6,227,800 B1 vorbekannt ist. Ringkanäle in einem derart geringen Bauraum sind sehr verlustvoll und nicht effizient, da die Randbedingungen der Luftströmung radial außen und radial innen durch ihre Nähe ungünstig sind.

Bei den aus dem Stand der Technik bekannten Lösungen, insbesondere beim Einbau separater Rohrsysteme, ergibt sich weiterhin der Nachteil, dass eine Vielzahl komplexer Bauteile erforderlich ist, welche einen hohen Fertigungs- und Montageaufwand erfordern und hinsichtlich der thermischen Belastung, insbesondere des Kern-Triebwerksgehäuses, ungünstig sind. Zudem erfordern separate Rohrsysteme zusätzliche Maßnahmen (kurviger Verlauf der Rohre), um thermische Ausdehnungen oder Kontraktionen zu berücksichtigen.

Aus der US 2009/180872 A1 ist es bekannt, ein Kerntriebwerksgehäuse doppelwandig auszubilden und den Zwischenraum in einzelne Kanäle zu unterteilen, durch welche auch ein Kühlmedium durchgeleitet werden kann. Das Gehäuse kann in einzelne Gehäusebereiche unterteilt sein.

Der Erfindung liegt die Aufgabe zugrunde, ein Kern-Triebwerksgehäuse einer Fluggasturbine zu schaffen, welches bei einfachem Aufbau und einfacher, kostengünstiger Herstellbarkeit die Nachteile des Standes der Technik vermeidet und sowohl eine optimierte Kühlluftführung als auch optimierte thermische Betriebsbedingungen gewährleistet.

Erfindungsgemäß wird die Aufgabe durch die Merkmalskombination des Anspruchs 1 gelöst, die Unteransprüche zeigen weitere vorteilhafte Ausgestaltungen der Erfindung.

Im Einzelnen ist erfindungsgemäß somit vorgesehen, dass an der Außenwandung des Kern-Triebwerksgehäuses einstückig mit der Außenwandung Kühlluftröhren ausgebildet sind, welche sich im Wesentlichen in Axialrichtung, bezogen auf die Triebwerksachse, erstrecken.

Durch die einstückige Ausgestaltung mit dem Kern-Triebwerksgehäuse wird sehr wenig Bauraum benötigt, da die Kühlluftröhren, welche einen kreisrunden oder einen anderen, beliebigen Querschnitt aufweisen können, mit ihrer Wandung zugleich die Wandung des Kern-Triebwerksgehäuses darstellen. Hierdurch ergibt sich eine sehr kompakte Bauweise. Die im Stand der Technik vorgesehenen Abstände zwischen der Außenwandung des Kern-Triebwerksgehäuses und separaten Rohrleitungen wird somit vermieden. Hierdurch vereinfacht sich auch die Möglichkeit, weitere Komponenten an dem Kern-Triebwerksgehäuse anzubringen, da der somit zur Verfügung stehende Bauraum nicht durch Rohrleitungen begrenzt wird. Beim Stand der Technik ist stets ein Mindestabstand zwischen den Rohrleitungen und anderen Bauelementen nötig. Alternativ hierzu ist es möglich, den Zwischenraum zwischen der Außenwandung des Kern-Triebwerksgehäuses und der Innenwandung des Nebenstromkanals weiter zu reduzieren. Weiterhin ist es erfindungsgemäß nicht erforderlich, wegen der thermischen Expansionen und Kontraktionen kurvige Verläufe von Rohren vorzusehen.

Durch die direkte Auflage und Integrierung der Kühlluftröhren in die Außenwandung des Kern-Triebwerksgehäuses erfolgt zugleich eine Kühlung des Kern-Triebwerksgehäuses durch die mittels der Kühlluftröhren geförderte Kühlluft.

Die einstückig mit der Außenwandung verbundenen Kühlluftröhren führen weiterhin zu einer zusätzlichen Stabilität und Festigkeit des Kern-Triebwerksgehäuses, so dass dessen Wandung mit einem dünneren Querschnitt ausgebildet sein kann. Zusätzlich werden Schwingungen unterdrückt. Es ergeben sich auch geringere thermische Laufspaltschwankungen (tip clearence) zu innerhalb des Kern-Triebwerksgehäuses angeordneten Schaufeln, beispielsweise im Turbinenbereich.

Da das Kern-Triebwerksgehäuse üblicherweise mittels spanabhebender Fertigungsverfahren gefertigt wird, ist es auf besonders einfache Weise möglich, die Kühlluftröhren hinsichtlich ihrer Außenkontur einstückig mit dem Kern-Triebwerksgehäuse auszubilden. Die Kühlluftröhren können anschließend gebohrt oder gefräst werden, um ihren Innendurchmesser in gewünschter Weise auszubilden. Dabei kann gegebenenfalls auf separate Anschlussfittings verzichtet werden, da von der Innenseite der Außenwandung des Kern-Triebwerksgehäuses direkt Öffnungen in die Kühlluftröhren ausgearbeitet werden können. Stirnseitige Öffnungen der Kühlluftröhren können mittels Verschlussstopfen oder ähnlichem verschlossen werden.

In besonders günstiger Ausgestaltung der Erfindung ist vorgesehen, dass das Kern-Triebwerksgehäuse in die einzelnen Bereiche, insbesondere den Kompressorbereich, den Brennkammerbereich und den Turbinenbereich, unterteilt ist, welche separat gefertigt und anschließend zusammenmontiert werden. Dabei ist es günstig, wenn auch die Kühlluftröhren bei der Montage endseitig verbunden werden. Dies kann gegebenenfalls unter Zwischenlage von Dichtungen oder ähnlichem erfolgen.

Besonders günstig ist es, wenn die einzelnen Bereiche des Kern-Triebwerksgehäuses mittels Flansche miteinander verbunden sind. Dabei können sich die Kühlluftröhren durch die Flansche erstrecken, so dass diese auf entsprechend einfache Weise ebenfalls dicht miteinander verbunden werden können, so wie dies durch die Abdichtung der Gehäusebereiche gegeneinander erfolgt.

Alternativ zu der Fertigung der Kühlluftröhren zusammen mit den jeweiligen Bereichen des Kern-Triebwerksgehäuses ist es auch möglich, die Kühlluftröhren separat zu fertigen und anschließend mittels eines geeigneten Fügeverfahrens mit der Außenwandung des Kern-Triebwerksgehäuses zu verbinden, beispielsweise zu verschweißen.

Bevorzugterweise sind um den Umfang verteilt mehrere Kühlluftröhren vorgesehen, so dass sich hinsichtlich der Kühlung des gesamten Kern-Triebwerksgehäuses und der Steigerung der mechanischen Festigkeit optimale Verhältnisse einstellen.

Die erfindungsgemäß vorgesehenen Kühlluftröhren können sich auch über unterschiedlich axiale Teilbereiche des Kern-Triebwerksgehäuses erstrecken, beispielsweise vom Kompressorbereich bis zum Brennkammerbereich oder vom Kompressorbereich bis zum Turbinenbereich.

Nachfolgend wird die Erfindung anhand eines Ausführungsbeispiels in Verbindung mit der Zeichnung beschrieben. Dabei zeigt:
- Fig. 1: eine schematische Darstellung eines Gasturbinentriebwerks gemäß der vorliegenden Erfindung;
- Fig. 2: eine perspektivische Außenansicht eines erfindungsgemäßen KernTriebwerksgehäuses;
- Fig.3-5: perspektivische Teilansichten des in Fig. 2 gezeigten KernTriebwerksgehäuses.

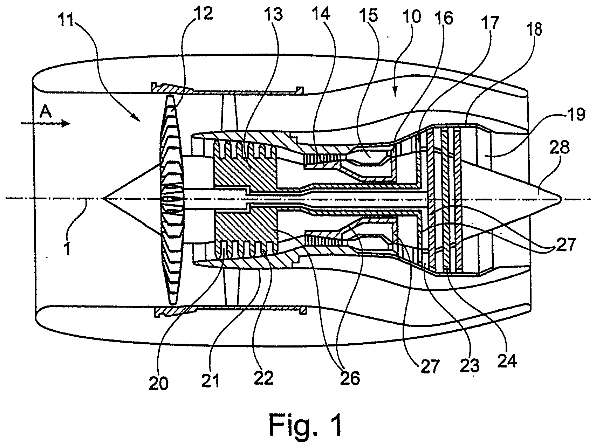

Das Gasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Mitteldruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Kern-Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenrotorschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenrotorschaufeln 24 drehen sich im Betrieb um die Triebwerksachse 1.

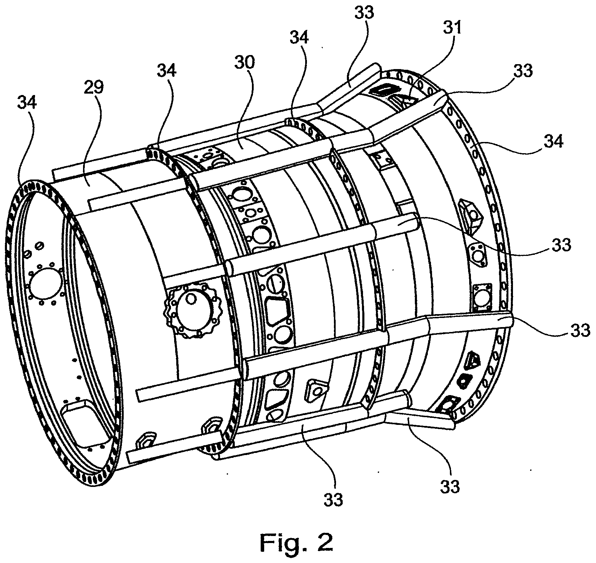

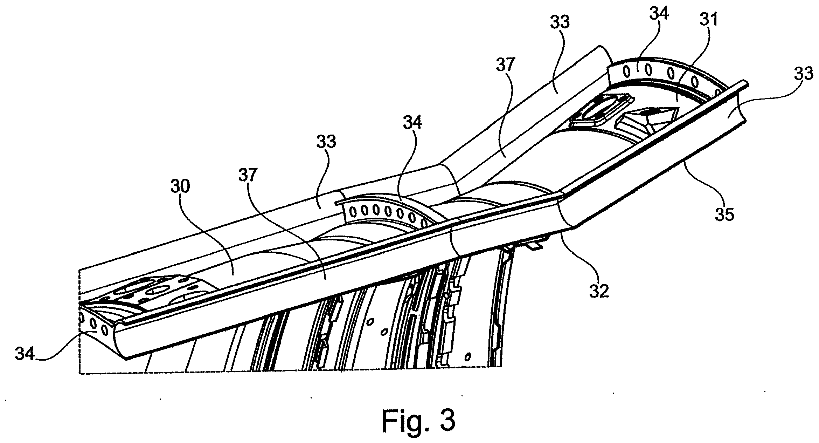

Die Fig. 2 zeigt eine perspektivische Darstellung eines Ausführungsbeispiels eines Kern-Triebwerksgehäuses 21, welche in vereinfachter Darstellung einen Kompressorbereich 29, einen Brennkammerbereich 30 und einen Turbinenbereich 31 umfasst. Die einzelnen Bereiche 29, 30 und 31 sind jeweils mittels Flanschen 34 verbunden. Dies ist im Detail in vergrößerter Darstellung in den Fig. 3 bis 5 dargestellt.

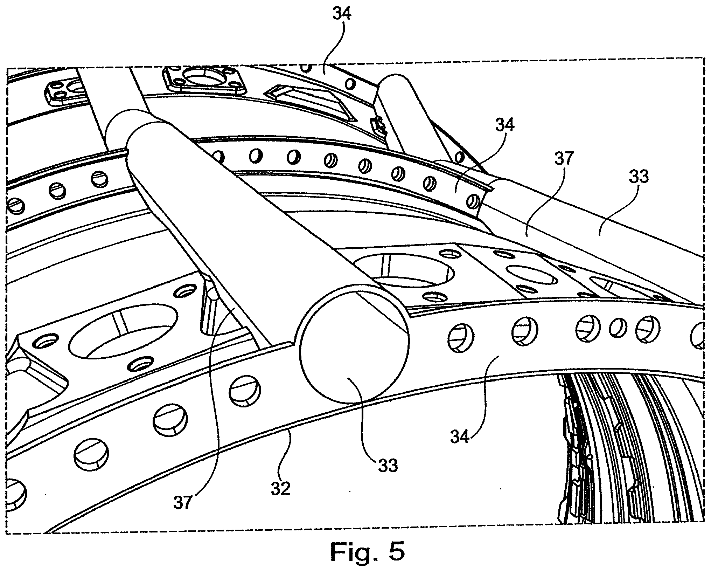

Insbesondere aus den Fig. 3 und 5 ergibt sich, dass eine Außenwandung 32 der Bereiche 29, 30, 31 des Kern-Triebwerksgehäuses 21 einstückig mit Kühlluftröhren 33 verbunden ist. Die Kühlluftröhren 33 sind somit in die Außenwandung 32 integriert und liegen dicht an der Außenwandung 32 an. Im Bereich der Flansche 34 sind geeignete Aussparungen vorgesehen, um die Kühlluftröhren 33 durch die Flansche 34 zu führen.

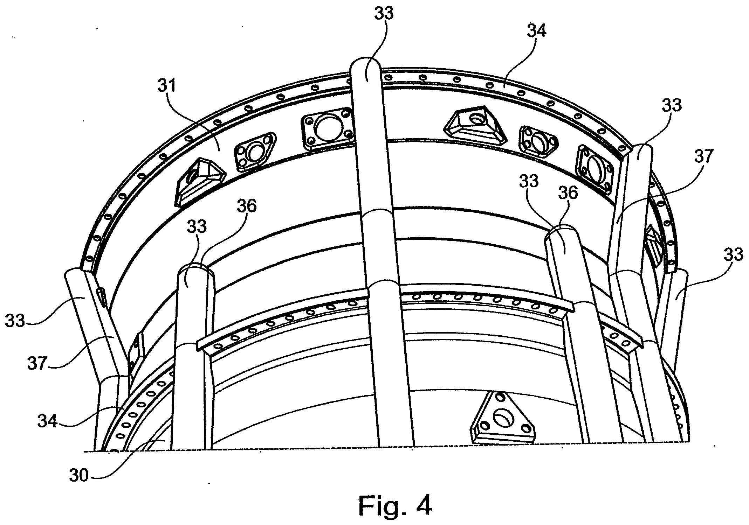

Wie beispielsweise aus Fig. 3 ersichtlich, kann die Außenwandung 32 jeweils mit einer Ausnehmung 35 versehen sein, um das Innenvolumen der Kühlluftröhren 33 mit einem geeigneten Fitting oder ähnlichem zu verbinden. Gegebenenfalls auftretende freie Endbereiche der Kühlluftröhren 33 können mittels im Einzelnen nicht dargestellter Verschlusselemente 36 (s. Figur 4) verschlossen werden. Abgewinkelte Kühlluftröhren 33 können von beiden Seiten (von vorne und von hinten) durch Bohren hergestellt werden.

Die Figuren zeigen weiterhin Randstege 37, welche sich bei der einstückigen Fertigung der Kühlluftröhren 33 ergeben können und welche zur Steigerung der mechanischen Festigkeit dienen. Die Kühlluftröhren 33 können, wie erwähnt, gebohrt oder gefräst werden, nachdem die Außenkontur des Kern-Triebwerksgehäuses 21 beispielsweise mit spanabhebender Fertigungsverfahren erzeugt wurde.

### Bezugszeichenliste:

- 1: Triebwerksachse
- 10: Gasturbinentriebwerk / Kerntriebwerk
- 11: Lufteinlass
- 12: Fan
- 13: Mitteldruckkompressor (Verdichter)
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Kern-Triebwerksgehäuse
- 22: Kompressorlaufschaufeln
- 23: Leitschaufeln
- 24: Turbinenrotorschaufeln
- 25: ---
- 26: Kompressortrommel oder -scheibe
- 27: Turbinenrotornabe
- 28: Auslasskonus
- 29: Kompressorbereich
- 30: Brennkammerbereich
- 31: Turbinenbereich
- 32: Außenwandung
- 33: Kühlluftröhre
- 34: Flansch
- 35: Ausnehmung
- 36: Verschlusselement
- 37: Randsteg

## Patentansprüche

1. Fluggasturbine mit einem Kerntriebwerksgehäuse (21) eines Kerntriebwerks (10), wobei das Kerntriebwerksgehäuse (21) zumindest einen Kompressorbereich (29), einen Brennkammerbereich (30) und einen Turbinenbereich (31) aufweist, wobei das Kerntriebwerksgehäuse (21) an seiner Außenwandung (32) mehrere einstückig mit der Außenwandung (32) ausgebildete, sich in Axialrichtung, bezogen auf eine Triebwerksachse (1) erstreckende Kühlluftröhren (33) aufweist, **dadurch gekennzeichnet, dass** die Kühlluftröhren (33) zusammen mit den jeweiligen Bereichen (29, 30, 31) des Kerntriebwerksgehäuses (21) gefertigt und mittels Bohr- oder Fräsverfahren gefertigt oder fertiggestellt sind.

2. Fluggasturbine nach Anspruch 1, **dadurch gekennzeichnet, dass** das Kerntriebwerksgehäuse (21) einzelne Bereiche (29, 30, 31) aufweist, welche als separate Bauteile gefertigt und zusammengefügt sind.

3. Fluggasturbine nach Anspruch 2, **dadurch gekennzeichnet, dass** die einzelnen Bereiche (29, 30, 31) mittels Flanschen (34) miteinander verbunden sind und dass sich die Kühlluftröhren (33) durch die Flansche (34) erstrecken.

4. Fluggasturbine nach einem der Ansprüche 1 bis 3, **dadurch gekennzeichnet, dass** die Kühlluftröhren (33) als separate Rohre vorgefertigt und mittels Fügeverfahren mit den einzelnen Bereichen (29, 30, 31) des Kerntriebwerksgehäuses (21) einstückig verbunden sind.

5. Fluggasturbine nach einem der Ansprüche 1 bis 4, **dadurch gekennzeichnet, dass** um den Umfang verteilt mehrere Kühlluftröhren (33) vorgesehen sind.

6. Fluggasturbine nach Anspruch 5, **dadurch gekennzeichnet, dass** sich die mehreren Kühlluftröhren (33) über unterschiedliche axiale Teilbereiche des Kerntriebwerksgehäuses (21) erstrecken.

## Claims

1. Aircraft gas turbine having a core engine casing (21) for a core engine (10), said core engine casing (21) including at least a compressor area (29), a combustion chamber area (30) and a turbine area (31), where the core engine casing (21) is provided on its outer wall (32) with several cooling-air tubes (33) which are designed in one piece with said outer wall (32) and extend in the axial direction relative to an engine axis (1), **characterized in that** the cooling-air tubes (33) are manufactured together with the respective areas (29, 30, 31) of the core engine casing (21) and manufactured or finished using drilling or milling methods.

2. Aircraft gas turbine in accordance with Claim 1, **characterized in that** the core engine casing (21) has individual areas (29, 30, 31), which are made as separate components and put together.

3. Aircraft gas turbine in accordance with Claim 2, **characterized in that** the individual areas (29, 30, 31) are connected to one another by means of flanges (34) and that the cooling-air tubes (33) extend through the flanges (34).

4. Aircraft gas turbine in accordance with one of the Claims 1 to 3, **characterized in that** the cooling-air tubes (33) are premanufactured as separate tubes and connected in one piece to the individual areas (29, 30, 31) of the core engine casing (21) by means of joining methods.

5. Aircraft gas turbine in accordance with one of the Claims 1 to 4, **characterized in that** several cooling-air tubes (33) are provided, spread over the circumference.

6. Aircraft gas turbine in accordance with Claim 5, **characterized in that** the several cooling-air tubes (33) extend over differing axial part-areas of the core engine casing (21).

## Revendications

1. Turbine à gaz aéronautique avec un carter (21) de moteur de base pour un moteur de base (10), sachant que ledit carter (21) de moteur de base présente au moins une zone de compresseur (29), une zone de chambre de combustion (30) et une zone de turbine (31), et que le carter (21) de moteur de base présente, sur sa paroi extérieure (32), plusieurs tuyaux d'air de refroidissement (33) formés en une seule pièce avec la paroi extérieure (32) et s'étendant dans le sens axial par rapport à un axe du moteur (1), **caractérisée en ce que** les tuyaux d'air de refroidissement (33) sont fabriqués conjointement avec les zones (29, 30, 31) respectives du carter (21) de moteur de base et fabriqués ou finis au moyen de procédés de perçage ou de fraisage.

2. Turbine à gaz aéronautique selon la revendication n° 1, **caractérisée en ce que** le carter (21) de moteur de base présente des zones (29, 30, 31) individuelles qui sont fabriquées sous forme de composants séparés puis assemblées.

3. Turbine à gaz aéronautique selon la revendication n° 2, **caractérisée en ce que** les zones (29, 30, 31) individuelles sont reliées entre elles par des brides (34) et que les tuyaux d'air de refroidissement (33) traversent les brides (34).

4. Turbine à gaz aéronautique selon une des revendications n° 1 à n° 3, **caractérisée en ce que** les tuyaux d'air de refroidissement (33) sont préfabriqués sous forme de tuyaux séparés puis reliés en une seule pièce par des procédés d'assemblage aux zones (29, 30, 31) individuelles du carter (21) de moteur de base.

5. Turbine à gaz aéronautique selon une des revendications n° 1 à n° 4, **caractérisée en ce que** plusieurs tuyaux d'air de refroidissement (33) sont distribués sur la circonférence.

6. Turbine à gaz aéronautique selon la revendication n° 5, **caractérisée en ce que** les plusieurs tuyaux d'air de refroidissement (33) s'étendent sur différentes zones partielles axiales du carter (21) de moteur de base.
